# EUROPÄISCHE PATENTSCHRIFT

(11) **EP 1 972 888 B1**
(45) Veröffentlichungstag und Bekanntmachung des Hinweises auf die Patenterteilung: **15.05.2013**
(21) Anmeldenummer: 08004211.2
(22) Anmeldetag: 07.03.2008
(51) Int. Cl.: G01C 9/00, G01P 15/00, B60W 40/06

(54) **Vorrichtung und Verfahren zur Steigungsermittlung**
Device and method for determining inclination
Procédé et dispositif destinés à la détermination d'une augmentation

(30) Priorität: 17.03.2007 DE 102007012829
(43) Veröffentlichungstag der Anmeldung: 24.09.2008
(73) Patentinhaber: Volkswagen Aktiengesellschaft, 38440 Wolfsburg (DE)
(72) Erfinder: Rohlfs, Michael, 38531 Rötgesbüttel (DE); Ullrich, Manfred, 30982 Pattensen-Vardegötzen (DE); Berkner, Stefan, 38518 Gifhorn (DE)

(56) Entgegenhaltungen:
- DE-A1- 10 026 102
- DE-A1- 10 154 341
- DE-A1- 10 248 432
- DE-A1-102005 003 292

## Beschreibung

Die Erfindung betrifft eine Vorrichtung zur Steigungsermittlung in einem Kraftfahrzeug umfassend einen Längsbeschleunigungssensor zum Erzeugen eines Längsbeschleunigungssignals, eine Steuereinheit zum Auswerten des Längsbeschleunigunggsignals und Erzeugen eines Steigungssignals, das eine Steigung eines Untergrunds an der Stelle repräsentiert, an der sich das Kraftfahrzeug befindet sowie ein entsprechendes Verfahren zum Ermitteln einer Steigung des Untergrunds, auf dem sich das Kraftfahrzeug befindet.

Eine Kenntnis einer Steigung eines Untergrunds, auf dem sich ein Kraftfahrzeug bewegt, ist in unterschiedlichen Situationen notwendig. Bei einer genauen Kenntnis der Steigung des Untergrunds, kann beispielsweise ein Längsbeschleunigungssignal des Kraftfahrzeugs hinsichtlich Beschleunigungsanteilen aufgrund der Erdanziehung korrigiert werden. Ein solches korrigiertes Längsbeschleunigungssignal kann dann wiederum beispielsweise verwendet werden, um eine Fahrtrichtungserkennung auszuführen. Hierbei wird das Längsbeschleunigungssignal integriert, um ein mit einem Vorzeichen behaftetes Geschwindigkeitssignal zu erhalten.

Aus der DE 37 44 159 A1 ist ein Gerät zur Bestimmung der Geschwindigkeit von Fahrzeugen bekannt, das einen Beschleunigungsmesser zur Erzeugung eines die Längsbeschleunigung des Fahrzeugs wiedergebenden Längsbeschleunigungssignals, einen Lagesensor, der ein die Längsneigung des Fahrzeugs wiedergebendes Längsneigungssignal liefert, und Kompensatiönsmiftel enthält, auf welche das Längsbesehleunigüngssignal und das Längsneigungssignal aufgeschaltet sind zur Erzeugung eines hinsichtlich des Schwerebeschleunigungsanteits korrigierten Längsbeschleunigungssignals. Integrationsmittel integrieren das Längsbeschleunigungssignal über ein Schätzintervall und erzeugen ein inertiales Geschwindigkeitssignal, das die Änderung der Geschwindigkeit in dem Schätzintervall wiedergibt. Ein Geschwindigkeitsmesser erzeugt ein die Geschwindigkeit des Fahrzeugs gegenüber Grund wiedergebendes Signal.

Ein nach der Methode der kleinsten Fehlerquadrate arbeitender Parameterschätzer dritter Ordnung erhält das inertiale Geschwindigkeitssignal und das Signal von dem Geschwindigkeitsmesser. Er liefert als Ausgangsgröße einen Schlupffaktor. Das Signal von dem Geschwindigkeitsmesser wird mit diesem Schlupffaktor korrigiert. Die Parameter werden während jedes Schätzintervalls als konstant angesehen. Die Schätzung wird laufend wiederholt, um Änderungen der Parameter zu berücksichtigen. Der Rechneraufwand wird dabei gering gehalten. Als Lagesensor wird ein Wendekreisel eingesetzt. Da diese in der Herstellung teuer sind, ist die bekannte Vorrichtung für einen Einsatz in Kraftfahrzeugen nicht geeignet.

Aus der noch unveröffentlichten Anmeldung DE 10 2006 038 829 sind eine Vorrichtung und ein Verfahren zur Fahrrichtungserkennung bekannt. Hierbei wird ein Istsignal von mindestens jeweils zwei Raddrehzahlsensoren des Kraftfahrzeugs erfasst, eine zeitliche Abfolge der erfassten Istsignale gebildet, die Istsignalabfolge mit einer Sollsignalabfolge für mindestens eine Fahrtrichtung verglichen und die Fahrtrichtung anhand des Vergleichs ermittelt.

Eine Kenntnis der Steigung des Untergrunds ist jedoch auch in anderen Situationen hilfreich, beispielsweise um ein Schaltverhalten eines Automatikgetriebes zu beeinflussen.

Die Druckschrift DE 102 48 432 A1 beschreibt ein Verfahren und eine Vorrichtung zur Bestimmung der momentanen Fahrbahnneigung und Veränderung der Triebstrangsteuerung eines Fahrzeugs in Abhängigkeit von der bestimmten Fahrbahnneigung, wobei mittels mindestens eines Raddrehzahlsensors die Fahrzeuggeschwindigkeit ermittelt wird. Durch Differenzierung der Fahrzeuggeschwindigkeit nach der Zeit ergibt sich die Fahrzeugbeschleunigung bezüglich der Fahrbahn und mittels eines Beschleunigungssensors wird die absolute Fahrzeugbeschleunigung bestimmt. Aus der Differenz beider Beschleunigungswerte wird die Fahrbahnsteigung bestimmt.

Die Druckschrift DE 101 54 341 A1 beschreibt ebenfalls eine Vorrichtung und ein Verfahren zur Bestimmung der Fahrbahnneigung mittels eines Beschleunigungswerts eines Beschleunigungssensors und eines aus dem Geschwindigkeitsgradienten ermittelten Beschleunigungswertes.

Ferner offenbart das Dokument DE 100 26 102 A1 ein Verfahren zur Erkennung einer Bergauf- oder Bergabfahrt eines Kraftfahrzeugs. Dabei wird aus den Radsensorsignalen des beispielsweise sich am langsamsten drehenden Rades eine Fahrzeugreferenzgeschwindigkeit ermittelt, aus der durch Differentiation eine Referenzbeschleunigung abgeleitet wird. Diese Referenzbeschleunigung kann mit weiteren Fahrzeugbeschleunigungen verglichen werden, die durch weitere Sensoren ermittelt werden. Eine Plausibilitätsbetrachtung des Vergleichs kann dann einen Hinweis darauf ergeben, ob die Referenzgeschwindigkeit der tatsächlichen Geschwindigkeit entspricht oder nicht. Ist dies der Fall, so könnte ein Radschlupf vorliegen.

Die technische Aufgabe wird erfindungsgemäß durch eine Vorrichtung mit den Merkmalen des Patentanspruchs 1 und ein Verfahren mit den Merkmalen des Patentanspruchs 4 gelöst. Vorteilhafte Ausgestaltungen der Erfindung ergeben sich aus den Unteransprüchen.

Hierfür ist bei einer Vorrichtung eingangs genannter Art vorgesehen, dass die Steuereinheit ausgebildet ist, ein Fahrzeugbewegungssignal zu empfangen und gemeinsam mit dem - Längsbeschleunigungssignal auszuwerten, um das Steigungssignal zu erzeugen. Das Fahrzeugbewegungssignal liefert die notwendigen Informationen um eine dynamische Beschleunigung abzuleiten, die für eine Korrektur des Längsbeschleunigungssignals notwendig sind, um den Erdbeschleunigungsanteil zu ermitteln. Dieser Erdbeschleunigungsanteil in dem Längsbeschleunigungssignal ist ein Maß für die Steigung des Untergrunds, auf dem sich das Kraftfahrzeug befindet. Somit ist aus dem Fahrzeugbewegungssignal eine dynamische Fahrzeugbeschleunigung ableitbar, die von der gemessenen Längsbeschleunigung subtrahierbar ist, um einen aufgrund einer Steigung des Untergrunds verursachten Erdbeschleunigungsanteil der gemessenen Längsbeschleunigung zu ermitteln, aus dem wiederum die Steigung des Untergrunds errechenbar ist. Der Arcus-Sinus des auf die Erdbeschleunigung normierten Erdbeschleunigungsanteils ist ein Maß für die Steigung. Somit kann auf einfache Weise zuverlässig die Steigung des Untergrunds bestimmt werden.

Bei einer bevorzugten Ausführungsform der Erfindung ist vorgesehen, dass das Fahrzeugbewegungssignal Radimpulssignale umfasst, die bei einer Drehung mindestens eines Rads des Kraftfahrzeugs erzeugt werden. Das Fahrzeugbewegungssignal repräsentiert somit, die auf dem Untergrund zurückgelegte Strecke. Hierdurch wird erreicht, dass bis hin zu sehr niedrigen Geschwindigkeiten eine zuverlässige Steigungsermittlung möglich ist. Hierbei wird ausgenutzt, dass die Steigung des Untergrunds in der realen Welt über kurze Strecken als konstant angenommen werden kann. Dieses ermöglicht eine Bestimmung der dynamischen Fahrzeugbeschleunigung auch bei sehr geringen Geschwindigkeiten, bei denen das Fahrzeug nur eine sehr kurze Strecke in einem relativ langen Zeitraum zurücklegt. Die Radimpulse zu verwenden bietet den Vorteil, dass diese Sensoren in den meisten Fahrzeugen bereits serienmäßig eingesetzt sind und somit deren Signal bereits zur Verfügung steht. Eine Steigungsbestimmung kann somit anhand vorhandener Signale ermittelt werden.

Um die dynamische Längsbeschleunigung zu ermitteln, ist vorgesehen, dass die Steuereinheit ausgebildet ist, aus einer durch das Fahrzeugbewegungssignal repräsentierten zurückgelegten Strecke mittels zweifacher Differentiation nach der Zeit eine dynamische Längsbeschleunigung zu berechnen, die bei der Auswertung von der durch das Längsbeschleunigungssignal repräsentierten Beschleunigung subtrahiert wird.

Insbesondere bei geringen Geschwindigkeiten wird eine Verbesserung der Ermittlung der dynamischen Längsbeschleunigung mit einer Vorrichtung erreicht, bei der das Fahrzeugbewegungssignal Radimpulssignale von mindestens zwei der Räder des Kraftfahrzeugs umfasst und eine Mustererkennungseinheit zum Vergleichen einer Sollabfolge mit einer Istabfolge der Radimpulssignale der unterschiedlichen Räder vorgesehen ist, wobei aus dem Vergleich gewonnene Informationen zur Ermittlung des dynamischen Längsbeschleunigungssignals verwendbar sind. Die Sensoren zum Erfassen und/oder Erzeugen der Radimpulssignale erzeugen bei einer Radumdrehung beispielsweise 92 Impulse. Die von unterschiedlichen Rädern erzeugen Radimpulssignale werden jedoch nicht zeitgleich erzeugt..Somit gibt es eine erwartete, als Sollabfolge bezeichnete Abfolge der einzelnen Radimpulssignale der einzelnen Räder.

Weicht eine ermittelte Istabfolge hiervon ab, so kann eine Bewegungsumkehr oder ein erhöhter Schlupf eines der Räder festgestellt werden. Hierdurch kann eine Ermittlung der dynamischen Längsbeschleunigung robuster gemacht werden.

Weiterhin hat es sich als vorteilhaft erwiesen, eine Zeitbestimmungseinheit vorzusehen. Anhand der Zeitbestimmungseinheit kann beispielsweise jeweils eine Zeitspanne seit dem Erfassen eines zuletzt erfassten Radimpulses ermittelt werden und hieraus eine Obergrenze/Untergrenze der dynamischen Längsbeschleunigung abgeschätzt werden.

Eine bevorzugte Ausführungsform der Erfindung sieht vor, dass das Längsbeschleunigungssignal des Längsbeschleunigungssensors mittels einer Tiefpassfilterung hinsichtlich einer Einbaulagenabweichung korrigiert wird. Geht man davon aus, dass sich ein Fahrzeug im zeitlichen Mittel oder im Streckenmittel auf einem waagerechten Untergrund bewegt, so kann durch eine Tiefpassfilterung des Längsbeschleunigungssignals ein aufgrund einer Abweichung von einer Solleinbaulage verursachter Erdbeschleunigungsanteil im Längsbeschleunigungssignal korrigiert werden. Hierbei werden vorzugsweise Filterzeitkonstanten im Bereich von Wochen oder Monaten verwendet.

Da bei einer Kurvenfahrt die Räder des Fahrzeugs unterschiedliche Wegstrecken zurücklegen, unterscheiden sich die an den Rädern auftretenden Beschleunigungen. Ferner sind die Wegstrecken zumindest an den gelenkten Rädern nicht mehr parallel zu einer Längsachse des Kraftfahrzeugs. Da die Radimpulssignale zur Bestimmung des dynamischen Längsbeschleunigungssignals herangezogen werden, ist bei einer bevorzugten Ausführungsform daher vorgesehen, dass ein Lenkwinkelsignal bei der Auswertung des Fahrzeugbewegungssignals mitberücksichtigt wird, um das dynamische Längsbeschleunigungssignal zu ermitteln.

Die Erfindung wird nachfolgend anhand eines bevorzugten Ausführungsbeispiels erläutert. In den zugehörigen Zeichnungen zeigen:
- Fig. 1: schematisch ein Kraftfahrzeug mit einer Vorrichtung zur Steigungsermittlung; und
- Fig. 2: ein Ablaufdiagramm einer Ausführungsform eines Verfahrens zur Steigungsermittlung.

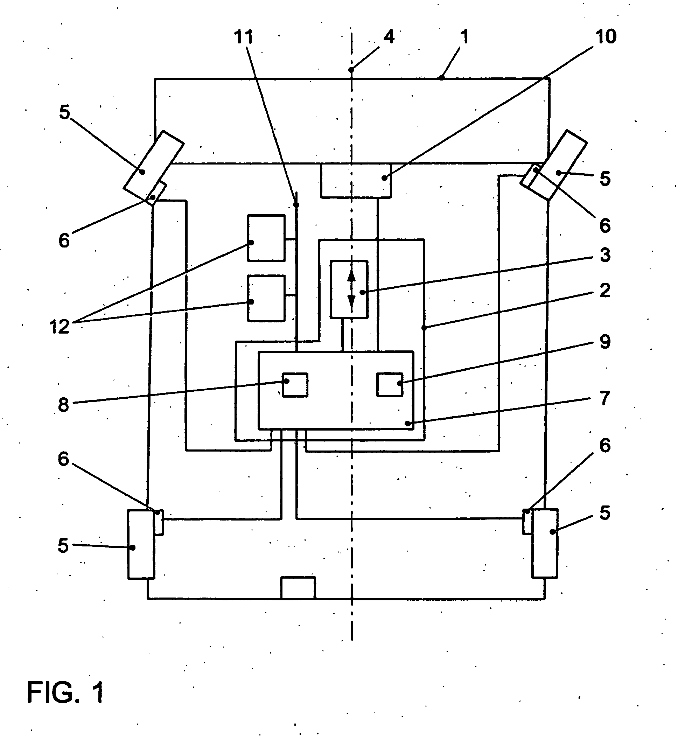

In Fig. 1 ist schematisch ein Kraftfahrzeug 1 mit einer Vorrichtung 2 zur Steigungsermittlung eines Untergrundes des Kraftfahrzeugs 1 dargestellt. Die Vorrichtung 2 zur Steigungsermittlung umfasst einen Längsbeschleunigungssensor 3. Der Längsbeschleunigungssensor 3 liefert ein Längsbeschleunigungssignal, das eine Längsbeschleunigung des Kraftfahrzeugs 1 entlang einer Längsachse 4 repräsentiert. Befindet sich das Kraftfahrzeug 1 nicht auf einem waagerechten Untergrund, so misst der Längsbeschleunigungssensor 3 auch ein von Null verschiedenes Beschleunigungssignal, wenn sich das Kraftfahrzeug mit konstanter gleichförmiger Geschwindigkeit bewegt, sich beispielsweise in Ruhe befindet. Der Arkus-Sinus dieser bei konstanter gleichförmiger Bewegung des Kraftfahrzeugs gemessenen Längsbeschleunigung a^{Sen} ist ein Maß für die Steigung des Untergrunds. Bewegt sich das Kraftfahrzeug nicht mit gleichförmig konstanter Geschwindigkeit, so ist das Längsbeschleunigungssignal a^{Sen} hinsichtlich dieser hier als dynamische Längsbeschleunigung a^{Rad} bezeichneten Beschleunigung des Kraftfahrzeugs 1 entlang der Längsachse 4 zu korrigieren, bevor der Arcus-Sinus der korrigierten Längsbeschleunigung a^{kor} = a^{Sen} - a^{Rad} als Maß für die Steigung des Untergrunds ermittelt werden kann.

Um die dynamische Längsbeschleunigung ermitteln zu können, wird ein Fahrzeugbewegungssignal ausgewertet, das eine Fahrzeugbewegung beschreibt. Hierfür umfasst das Kraftfahrzeug 1 in der beschriebenen Ausführungsform an Rädern 5 Radimpulssensoren 6, die bei einem Drehen des entsprechenden Rads 5 jeweils nach einem vorgegebenen Drehwinkelintervall ein Radimpulssignal erzeugen. Da ein Radumfang eines jeden der Räder 5 jeweils als konstant angesehen werden kann, ist ein Radimpuls (unter Vernachlässigung eines Schlupfes) ein Maß für eine beim Abrollen des Rads 5 auf dem Untergrund zurückgelegte Wegstrecke.

Durch eine zweifache Differentiation einer mit den in einer zeitlichen Abfolge erzeugten Wegimpulssignale eines der Räder 5 verknüpften zurückgelegten Strecke nach der Zeit kann eine hier als dynamische Beschleunigung a^{Rad} bezeichnete Beschleunigung des Kraftfahrzeugs ermittelt werden. Die Vorrichtung 2 zur Steigungsermittlung umfasst hierfür eine Steuereinrichtung 7 mit einer Differenziereinheit 8.

Diese kann beispielsweise folgende Verfahrensschritte ausführen, um die dynamische Beschleunigung a^{Rad} zu ermitteln. Zunächst wird jeweils mit Hilfe der bekannten Wegstrecke, die eines der Räder bei einer Drehung um das vorgegebene Drehwinkelintervall abrollt, und der Zeitspanne Δt_{i,i+1}, die zwischen dem Erzeugen der aufeinander folgenden Radimpulse i und i+1 vergangen ist, eine Fahrzeuggeschwindigkeit vᵢ₊₁ ermittelt. So kann für jeden Radimpuls i eine momentane Geschwindigkeit vᵢ ermittelt werden. Bildet man eine Differenz Δv_{i,i+1}=vᵢ₊₁ - vᵢ der momentanen Geschwindigkeiten vᵢ, vᵢ₊₁, die den aufeinander folgenden Radimpulsen i und i+1 zugeordnet sind, und dividiert diese Differenz Δv_{i,i+1} durch die Zeitspanne Δt_{i,i+1}, die zwischen dem Erzeugen der aufeinander folgenden Radimpulse i und i+1 vergangen ist, so erhält man die dynamische Beschleunigung a^{Rad}ᵢ₊₁. Zur Ermittlung der dynamischen Längsbeschleunigung können auch andere Berechnungsverfahren angewendet werden. Insbesondere bei höheren Geschwindigkeiten können mehrere Radimpulse (bzw. die hierdurch repräsentierte zurückgelegte Strecke) in die Berechnung mit einbezogen werden, um die Berechnung insgesamt robuster gegenüber Messungenauigkeiten auszugestalten.

Um auch bei geringen Geschwindigkeiten eine zuverlässige Bestimmung der dynamischen Längsbeschleunigung a^{Rad} zu ermöglichen, können die Radimpulssignale unterschiedlicher Räder 5 ausgewertet werden. Die Radimpulse der Räder 5 werden in der Regel nicht zeitgleich erzeugt. Bei Geradeausfahrt des Kraftfahrzeugs 1 werden die Radimpulssignale in zeitlicher Reihenfolge beispielsweise von den einzelnen Rädern 5 wie folgt: von dem linken Vorderrad, dem rechten Hinterrad, dem linken Hinterrad und dem rechten Vorderrad in dieser Reihenfolge erzeugt. Es kann somit ein Muster der Radimpulse der unterschiedlichen Räder 5 vorausgesagt werden. Hierüber ist es möglich, auch Radimpulse unterschiedlicher Räder 5 miteinander zu fusionieren. Eine Mustererkennungseinheit 9, die die hierfür erforderliche Analyse vornimmt, kann auch erkennen, ob beispielsweise eines der Räder 5 durchdreht. Insgesamt wird durch eine Mustererkennungseinheit 9 somit die Robustheit und Zuverlässigkeit der Steigungsbestimmung stark verbessert.

Um auch bei Kurvenfahrt eine zuverlässige Bestimmung zu ermöglichen, ist ein Lenkwinkelsensor 10 vorgesehen. Eine Berücksichtigung des Lenkwinkels ermöglicht es, die notwendigen Korrekturen vorzunehmen, um anhand der Radimpulse korrekt die dynamische Längsbeschleunigung a^{Rad} wie bei der Geradeausfahrt ermitteln zu können. Hierbei werden unterstützend die Ergebnisse der Mustererkennung einbezogen werden. Aus den zeitlichen Mustern der Radimpulse kann die Kurvenfahrt nämlich ebenfalls ermittelt werden.

Die Differenziertheit, die Mustererkennungseinheit können in der Steuereinheit mittels einer Recheneinheit im Zusammenwirken mit Software realisiert sein.

Die ermittelte Steigung wird über einen Fahrzeugbus 11 anderen Steuergeräten 12 bereitgestellt.

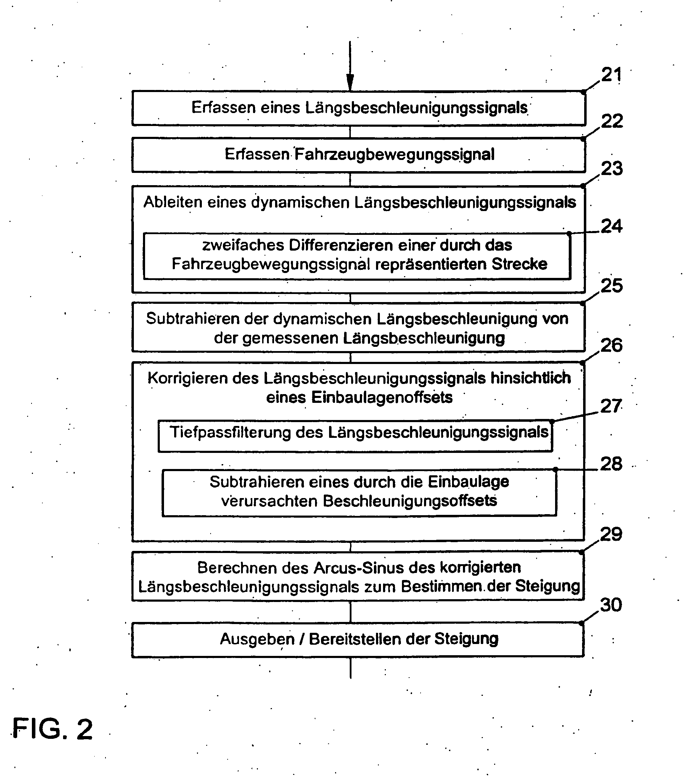

In Fig. 2 ist ein schematisches Ablaufdiagramm eines Verfahrens zur Steigungsbestimmung eines Untergrunds eines Kraftfahrzeugs dargestellt. Zunächst wird ein von einem Längsbeschleunigungssensor gemessenes Längsbeschleunigungssignal erfasst 21. Anschließend wird ein eine Fahrzeugbewegung repräsentierendes Fahrzeugbewegungssignal . erfasst 22. Das Fahrzeugbewegungssignal umfasst Radimpulssignale, die bei einer Drehung mindestens eines Rads des Kraftfahrzeugs erzeugt werden. Aus dem Fahrzeugbewegungssignal wird eine dynamische Längsbeschleunigung des Kraftfahrzeugs abgeleitet 23. Hierfür wird eine durch das Fahrzeugbewegungssignal repräsentierte zurückgelegte Strecke zweifach nach der Zeit differenziert 24. Die dynamische Fahrzeugbeschleunigung wird von der gemessenen Längsbeschleunigung subtrahiert 25, um einen aufgrund einer Steigung des Untergrunds verursachten Erdbeschleunigungsanteil der gemessenen Längsbeschleunigung zu ermitteln.

Um das Längsbeschleunigungssignal des Längsbeschleunigungssensors hinsichtlich einer Einbaulagenabweichung zu korrigieren 26, wird das Längsbeschleunigungssignal mittels eines Tiefpasses gefiltert 27. Hierdurch erhält man einen Einbaulagenoffset, der von dem gemessenen Längsbeschleunigungssignal subtrahiert wird 28. Alternativ oder zusätzlich kann der Längsbeschleunigungssensor bei seinem Einbau hinsichtlich eines durch die Einbaulage verursachten Beschleunigungsoffsets kalibriert werden bzw. sein.

Von dem korrigierten Längsbeschleunigungssignal wird der Arcus-Sinus bestimmt 29, der ein Maß für die Steigung des Untergrunds ist. Die so ermittelte Steigung wird ausgegeben und/oder bereitgestellt 30. Sie kann beispielsweise über einen Fahrzeugbus anderen Steuergeräten übermittelt werden. Bei diesen kann es sich beispielsweise um eine Steuerung eines Automatikgetriebes oder ein Fahrsicherheitssteuergerät handeln, welches beispielsweise Ausweichtrajektorien für Gefahr- und/oder Unfallsituationen errechnet. Beide Fahrzeugsysteme benötigen eine Kenntnis der Untergrundsteigung, um optimale Ergebnisse zu liefern.

Die Steigung kann gemeinsam mit dem eingekuppelten Gang verwendet werden, um in vielen Fällen eine Fahrtrichtung zuverlässig vorauszusagen. Ist die Straße in Vorwärtsfahrtrichtung abschüssig und ist bei einem in Ruhe befindlichen Fahrzeug der Vorwärtsgang eingelegt, so kann sich das Fahrzeug nur vorwärts bewegen. Ist bei einem ansteigenden Untergrund hingegen der Rückwärtsgang eingelegt, ist eine Vorwärtsbewegung ausgeschlossen.

Die beschriebene Vorrichtung und das beschriebene Verfahren liefern geschwindigkeitsunabhängig ein robustes Steigungssignal. Dieses kann beispielsweise von einem Parklenkassistenzsystem zur Berechnung einer Einparktrajektorie und zum Ausführen von Fahrteingriffen genützt werden.

### Bezugszeichenliste

- 1: Kraftfahrzeug
- 2: Vorrichtung zur Steigungsermittlung
- 3: Längsbeschleunigungssensör
- 4: Längsachse
- 5: Räder
- 6: Radimpulssensoren
- 7: Steuereinheit
- 8: Differenziereinheit
- 9: Mustererkennungseinheit
- 10: Lenkwinkelsensor
- 11: Fahrzeugbus
- 12: Steuergeräte
- 21: Erfassen eins Längsbeschleunigungssignals
- 22: Erfassen Fahrzeugbewegungssignal
- 23: Ableiten eines dynamischen Längsbeschleunigungssignals
- 24: zweifaches Differenzieren einer durch das Fahrzeugbewegungssignal repräsentierten Strecke
- 25: Subtrahieren der dynamischen Längsbeschleunigung von der gemessenen Längsbeschleunigung
- 26: Korrigieren des Längsbeschleunigungssignals hinsichtlich eines Einbaulagenoffsets
- 27: Tiefpassfilterung des Längsbeschleunigungssignals
- 28: Subtrahieren eines durch die Eibaulage verursachten Beschleunigungsoffsets
- 29: Berechnen des Arcus-Sinus des korrigierten Längsbeschleunigungssigrials zum Bestimmen der Steigung
- 30: Ausgeben/Bereitstellen der Steigung

## Patentansprüche

1. Vorrichtung (2) zur Steigungsermittlung in einem Kraftfahrzeug (1) umfassend einen Längsbeschleunigungssensor (3) zum Erzeugen eines Längsbeschleunigungssignals, das eine gemessene Längsbeschleunigung repräsentiert, eine Steuereinheit (7) zum Auswerten des Längsbeschleunigungssignals und Erzeugen eines Steigungssignals, das eine Steigung eines Untergrunds an der Stelle repräsentiert, an der sich das Kraftfahrzeug (1) befindet, wobei die Steuereinheit (7) ausgebildet ist, ein Fahrzeugbewegungssignal zu empfangen und gemeinsam mit dem gemessenen Längsbeschleunigungssignal auszuwerten, um das Steigungssignal zu erzeugen, und wobei die Steuereinheit ausgebildet ist, aus einer durch das Fahrzeugbewegungssignal repräsentierten zurückgelegten Strecke mittels zweifacher Differentiation nach der Zeit eine dynamische Längsbeschleunigung zu berechnen, die bei der Auswertung von der durch das Längsbeschleunigungssignal repräsentierten Beschleunigung subtrahiert wird,
**dadurch gekennzeichnet, dass**
das Fahrzeugbewegungssignal Radimpulssignale von mindestens zwei der Räder (5) des Kraftfahrzeugs (1) umfasst und eine Mustererkennungseinheit (9) zum Vergleichen einer Sollabfolge mit einer Istabfolge der Radimpulssignale der unterschiedlichen Räder (5) vorgesehen ist, wobei aus dem Vergleich gewonnene Informationen zur Ermittlung des dynamischen Längsbeschleunigungssignals verwendet werden, und wobei ein Lenkwinkelsignal bei der Auswertung des Fahrzeugbewegungssignals zur Ermittlung des dynamischen Längsbeschleunigungssignals mitberücksichtigt wird.

2. Vorrichtung nach Anspruch 1, **dadurch gekennzeichnet, dass** das Fahrzeugbewegungssignal Radimpulssignale umfasst, die bei einer Drehung mindestens eines Rads (5) des Kraftfahrzeugs (1) erzeugt werden.

3. Vorrichtung nach einem der genannten Ansprüche, **dadurch gekennzeichnet, dass** anhand einer Zeitbestimmungseinheit eine Zeitspanne seit dem Erfassen eines Raddrehimpulses ermittelt wird, und hieraus eine Obergrenze der dynamischen Längsbeschleunigung abgeschätzt wird.

4. Verfahren zum Ermitteln einer Steigung eines Untergrunds, auf dem sich ein Kraftfahrzeug (1) befindet, umfassend ein Erfassen eines gemessenen Längsbeschleunigungssignals eines Längsbeschleunigungssensors (3) des Kraftfahrzeugs (1) und Auswerten des Längsbeschleunigungssignals zum Ermitteln eines Steigungssignals, welches die Steigung des Untergrunds repräsentiert,
wobei ein eine Fahrzeugbewegung repräsentierendes Fahrzeugbewegungssignal erfasst wird und gemeinsam mit dem Längsbeschleunigungssignal ausgewertet wird, um das Steigungssignal zu erzeugen, und
wobei eine durch das Fahrzeugbewegungssignal repräsentierte zurückgelegte Strecke zweifach nach der Zeit differenziert wird, um eine dynamische Längsbeschleunigung zu berechnen, die bei der Auswertung von der durch das Längsbeschleunigungssignal repräsentierten Beschleunigung subtrahiert wird,
**dadurch gekennzeichnet, dass**,
das Fahrzeugbewegungssignal Radimpulssignale von mindestens zwei der Räder des Kraftfahrzeugs (1) umfasst und eine Musterkennung, die eine Sollabfolge mit einer Istabfolge der Radimpulssignale der unterschiedlichen Räder (5) vergleicht, mit verwendet wird, um das dynamische Längsbeschleunigungssignal zu ermitteln, wobei ein Lenkwinkelsignal bei der Auswertung des Fahrzeugbewegungssignals zur Ermittlung des dynamischen Längsbeschleunigungssignals mitberücksichtigt wird.

5. Verfahren nach Anspruch 4, **dadurch gekennzeichnet, dass** das Fahrzeugbewegungssignal Radimpulssignale umfasst, die bei einer Drehung mindestens eines Rads (5) des Kraftfahrzeugs (1) erzeugt werden.

6. Verfahren nach einem der Ansprüche 4 oder 5, **dadurch gekennzeichnet, dass** das Steigungssignal anhand des Arcus-Sinus des korrigierten Längsbeschleunigungssignals ermittelt wird.

7. Verfahren nach einem der Ansprüche 4 bis 6, **dadurch gekennzeichnet, dass** das Längsbeschleunigungssignal des Längsbeschleunigungssensors (3) mittels einer Tiefpassfilterung hinsichtlich einer Einbaulagenabweichung korrigiert wird.

## Claims

1. Device (2) for determining inclination in a motor vehicle (1), comprising a longitudinal acceleration sensor (3) for generating a longitudinal acceleration signal which represents a measured longitudinal acceleration, a control unit (7) for evaluating the longitudinal acceleration signal and generating an inclination signal which represents an inclination of an underlying surface at the location at which the motor vehicle (1) is located, wherein the control unit (7) is designed to receive a vehicle movement signal and to evaluate it together with the measured longitudinal acceleration signal in order to generate the inclination signal, and wherein the control unit is designed to calculate, from a distance covered, represented by the vehicle movement signal, a dynamic longitudinal acceleration by means of dual differentiation of time, which longitudinal acceleration is subtracted, during the evaluation, from the acceleration which is represented by the longitudinal acceleration signal,
**characterized in that**
the vehicle movement signal comprises wheel momentum signals of at least two of the wheels (5) of the motor vehicle (1), and a pattern recognition unit (9) for comparing a reference sequence with an actual sequence of the wheel impulse signals of the different wheels (5) is provided, wherein information which is acquired from the comparison is used to determine the dynamic longitudinal acceleration signal, and wherein a steering angle signal is also taken into account in the evaluation of the vehicle movement signal for the determination of the dynamic longitudinal acceleration signal.

2. Device according to Claim 1, **characterized in that** the vehicle movement signal comprises wheel momentum signals which are generated during a revolution of at least one wheel (5) of the motor vehicle (1).

3. Device according to one of the specified claims, **characterized in that** a time period since the detection of a wheel rotational momentum is determined on the basis of a timing unit, and an upper limit of the dynamic longitudinal acceleration is estimated from said time period.

4. Method for determining an inclination of an underlying surface on which a motor vehicle (1) is located, comprising detection of a measured longitudinal acceleration signal of a longitudinal acceleration sensor (3) of the motor vehicle (1) and evaluation of the longitudinal acceleration signal in order to determine an inclination signal which represents the inclination of the underlying surface, wherein a vehicle movement signal which represents a vehicle movement is detected and is evaluated together with the longitudinal acceleration signal in order to generate the inclination signal, and
wherein a distance covered, represented by the vehicle movement signal, is differentiated twice over time in order to calculate a dynamic longitudinal acceleration which is subtracted, during the evaluation, from the acceleration represented by the longitudinal acceleration signal,
**characterized in that**
the vehicle movement signal comprises wheel momentum signals of at least two of the wheels of the motor vehicle (1), and a pattern recognition means, which compares a reference sequence with an actual sequence of the wheel momentum signals of the different wheels (5), is also used to determine the dynamic longitudinal acceleration signal, wherein a steering angle signal is also taken into account in the evaluation of the vehicle movement signal in order to determine the dynamic longitudinal acceleration signal.

5. Method according to Claim 4, **characterized in that** the vehicle movement signal comprises wheel momentum signals which are generated during a rotation of at least one wheel (5) of the motor vehicle (1).

6. Method according to one of Claims 4 or 5, **characterized in that** the inclination signal is determined on the basis of the arc sine of the corrected longitudinal acceleration signal.

7. Method according to one of Claims 4 to 6, **characterized in that** the longitudinal acceleration signal of the longitudinal acceleration sensor (3) is corrected by means of low-pass filtering with respect to an installation position deviation.

## Revendications

1. Dispositif (2) de détermination d'une côte dans un véhicule automobile (1) comprenant un capteur d'accélération longitudinale (3) permettant de produire un signal d'accélération longitudinale représentant une accélération longitudinale mesurée, une unité de commande (7) permettant d'analyser le signal d'accélération longitudinale et de produire un signal de côte représentant une côte d'un sol à l'endroit où le véhicule automobile (1) se trouve, l'unité de commande (7) étant conçue pour recevoir un signal de mouvement du véhicule et pour l'analyser conjointement avec le signal d'accélération longitudinale mesuré pour produire le signal de côte et l'unité de commande étant conçue pour calculer, à partir d'un tronçon mémorisé représenté par le signal de mouvement du véhicule, une accélération longitudinale dynamique à l'aide d'une double différentiation en fonction du temps, ladite accélération longitudinale dynamique étant soustraite à l'accélération représentée par le signal d'accélération longitudinale représenté lors de l'analyse ;
**caractérisé en ce que** :
le signal de mouvement du véhicule comprend des signaux d'impulsion de roue d'au moins deux des roues (5) du véhicule automobile (1) et une unité de reconnaissance de modèle (9) est prévue pour comparer une séquence théorique à une séquence réelle des signaux d'impulsion de roue des différentes roues (5), les informations acquises à partir de la comparaison étant utilisées pour calculer le signal d'accélération longitudinale dynamique et un signal d'angle de direction étant pris en compte lors de l'analyse du signal de mouvement du véhicule pour calculer le signal d'accélération longitudinale dynamique.

2. Dispositif selon la revendication 1, **caractérisé en ce que** le signal de mouvement du véhicule comprend des signaux d'impulsion de roue produits en présence du pivotement d'au moins une roue (5) du véhicule automobile (1).

3. Dispositif selon l'une quelconque des revendications précédentes, **caractérisé en ce qu'**un intervalle de temps écoulé depuis la détection d'une impulsion de pivotement de roue est calculé à l'aide d'une unité de détermination du temps et qu'on en déduit une limite supérieure de l'accélération longitudinale dynamique.

4. Procédé de calcul d'une côte du sol sur lequel se trouve un véhicule automobile (1), comprenant la détection d'un signal d'accélération longitudinale mesuré d'un capteur d'accélération longitudinale (3) du véhicule automobile (1) et l'analyse du signal d'accélération longitudinale en vue de calculer un signal de côte représentant la côte du sol ;
un signal de mouvement du véhicule représentant un mouvement du véhicule étant détecté et analysé conjointement avec le signal d'accélération longitudinale pour produire le signal de côte ; et
un tronçon mémorisé représenté par le signal de mouvement du véhicule étant différencié à deux reprises en fonction du temps, pour calculer une accélération longitudinale dynamique ensuite soustraite lors de l'analyse à l'accélération représentée par le signal d'accélération longitudinale ;
**caractérisé en ce que** :
le signal de mouvement du véhicule comprend des signaux d'impulsion de roue d'au moins deux des roues du véhicule automobile (1) et une reconnaissance de modèle comparant une séquence théorique à une séquence réelle des signaux d'impulsion de roue des différentes roues (5) étant utilisée pour calculer le signal d'accélération longitudinale dynamique, un signal d'angle de direction étant pris en compte lors de l'analyse du signal de mouvement du véhicule pour calculer le signal d'accélération longitudinale dynamique.

5. Procédé selon la revendication 4, **caractérisé en ce que** le signal de mouvement du véhicule comprend des signaux d'impulsion de roue produits lors du pivotement d'au moins une roue (5) du véhicule automobile (1).

6. Procédé selon l'une quelconque des revendications 4 ou 5, **caractérisé en ce que** le signal de côte est calculé à l'aide de l'arc-sinus du signal d'accélération longitudinale corrigé.

7. Procédé selon l'une quelconque des revendications 4 à 6, **caractérisé en ce que** le signal d'accélération longitudinale du capteur d'accélération longitudinale (3) est corrigé au moyen d'un filtrage passe-bas par rapport à un écart de construction.
